# EUROPÄISCHE PATENTANMELDUNG

(11) **EP 4 835 235 A1**
(43) Veröffentlichungstag der Anmeldung: **04.11.2026**
(21) Anmeldenummer: 26175130.9
(22) Anmeldetag: 28.04.2026
(51) Int. Cl.: E05B 29/00, E05B 83/28, B60K 15/04

(54) **ZYLINDERKERN FÜR EIN ZYLINDERSCHLOSS**

(30) Priorität: 30.04.2025 DE 102025116758
(71) Anmelder: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(57) **Zusammenfassung**

Ein Zylinderkern für ein Zylinderschloss umfasst ein Kerngehäuse mit einem zylindrischen Kerngehäuseabschnitt, in dem Kerngehäuseabschnitt angeordnete Plättchenzuhaltungen und ein Riegelelement, welches zwischen einer radial innenliegenden Freigabestellung und einer außenliegenden Blockierstellung beweglich ist. Das Riegelelement ragt in der Blockierstellung aus dem Kerngehäuseabschnitt heraus, um eine Drehung des Zylinderkerns zu blockieren. Jede der Plättchenzuhaltungen ist zwischen einer Verriegelungsposition und einer Entriegelungsposition bewegbar und dazu ausgebildet, das Riegelelement in der Verriegelungsposition gegen eine Bewegung in die Freigabestellung zu sperren und in der Entriegelungsposition hierfür freizugeben, wobei die Plättchenzuhaltungen weder in der Entriegelungsposition noch in der Verriegelungsposition seitlich aus dem Kerngehäuseabschnitt herausragen.

## Beschreibung

Die Erfindung betrifft einen Zylinderkern für ein Zylinderschloss, welcher zum Einsetzen in ein Zylindergehäuse des Zylinderschlosses vorgesehen ist. Der Zylinderkern umfasst ein Kerngehäuse mit einem zylindrischen Kerngehäuseabschnitt und mit einem sich entlang einer Zylinderachse in den zylindrischen Kerngehäuseabschnitt hinein erstreckenden Schlüsselkanal, wobei der Zylinderkern durch einen in den Schlüsselkanal eingeführten zugeordneten Schlüssel um die Zylinderachse drehbar ist. Zudem umfasst der Zylinderkern mehrere in dem Kerngehäuseabschnitt angeordnete Pättchenzuhaltungen und ein Riegelelement, welches zwischen einer radial innenliegenden Freigabestellung und einer radial außenliegenden Blockierstellung beweglich ist. Das Riegelelement ragt in der Blockierstellung radial aus dem Kerngehäuseabschnitt heraus und ist dazu ausgebildet, in der Blockierstellung in eine zugeordnete Blockiervertiefung des Zylindergehäuses einzugreifen und dadurch eine Drehung des in das Zylindergehäuse eingesetzten Zylinderkerns um die Zylinderachse relativ zu dem Zylindergehäuse zu blockieren. Ferner sind die mehreren Plättchenzuhaltungen zwischen einer jeweiligen Verriegelungsposition und einer jeweiligen Entriegelungsposition bewegbar und dazu ausgebildet, das Riegelelement in der Verriegelungsposition gegen eine Bewegung in die Freigabestellung zu sperren und in der Entriegelungsposition für eine Bewegung in die Freigabestellung freizugeben.

Grundsätzlich können solche Zylinderkerne als Bestandteile von Zylinderschlössern bei einer Vielzahl von Anwendungen zum Einsatz kommen, um beispielsweise Türen, Klappen oder Deckel wahlweise gegen ein Öffnen verriegeln oder für ein Öffnen freigeben zu können. Hierzu kann der Zylinderkern um die Zylinderachse drehbar in das Zylindergehäuse eines Zylinderschlosses einsetzbar sein, wobei jedoch eine Drehung des Zylinderkerns relativ zu dem Zylindergehäuse bei nicht in den Schlüsselkanal eingeführtem zugeordneten Schlüssel blockiert sein kann, um hierdurch eine Verriegelung erreichen zu können. Dies kann erfolgen, indem mehrere Plättchenzuhaltungen bei nicht eingeführtem zugeordnetem Schlüssel eine Verriegelungsposition einnehmen, wobei die Plättchenzuhaltungen jedoch durch Einführen des zugeordneten Schlüssels in eine Entriegelungsposition sortierbar sein können, um den Zylinderkern hierdurch für eine Drehung freizugeben.

Insbesondere können solche Plättchenzuhaltungen als flache Bleche ausgebildet sein, welche entlang der Zylinderachse betrachtet hintereinander angeordnet und senkrecht zu der Zylinderachse ausgerichtet sein können. Herkömmlicherweise ragen die Plättchenzuhaltungen in der Verriegelungsposition seitlich aus dem Kerngehäuseabschnitt heraus, um in eine zugeordnete Blockiervertiefung des Zylindergehäuses eingreifen und hierdurch eine Drehung des Zylinderkerns sperren zu können. In der Entriegelungsposition können die Plättchenzuhaltungen hingegen radial nach innen in den Kerngehäuseabschnitt hinein bewegt und aus der Blockiervertiefung zurückgezogen sein, um den Zylinderkern für eine Drehung freizugeben.

Jedoch besteht bei Zylinderschlössern, bei welchen die Sicherung des Zylinderkerns ausschließlich durch solche Plättchenzuhaltungen erfolgt, die Problematik, dass die Plättchenzuhaltungen aufgrund deren schmaler Ausbildung entlang der Zylinderachse gegebenenfalls bei Aufbringen großer Kräfte in das Zylindergehäuse einschneiden können, so dass trotz der Positionierung der Plättchenzuhaltungen in der erwähnten Verriegelungsposition ein gewaltsames Drehen des Zylinderkerns und damit auch ein gewaltsames Öffnen des Zylinderschlosses erreicht werden kann. Dies kann insbesondere bei solchen Zylinderschlössern problematisch sein, bei welchen das Zylindergehäuse unmittelbar in eine Einbauumgebung des Zylinderschlosses integriert und daher etwa aus einem Kunststoff gebildet ist, beispielsweise bei einer Integration des Zylinderschlosses in einen Tankdeckel.

Um dieser Problematik zu begegnen, können Zylinderkerne daher zusätzlich das bereits erwähnte Riegelelement aufweisen, welches in einer Blockierstellung ebenfalls radial aus dem Kerngehäuseabschnitt herausragen und in eine zugeordnete Blockiervertiefung des Zylindergehäuses eingreifen kann. Das Riegelelement kann insbesondere im Vergleich zu den Plättchenzuhaltungen eine größere Anlagefläche bereitstellen, so dass das Riegelelement nicht in das Zylindergehäuse einschneiden und einem gewaltsames Drehen des Zylinderkerns somit zuverlässig entgegengewirkt werden kann. Zudem kann das Riegelelement durch die Plättchenzuhaltungen in der Blockierstellung sperrbar sein, so dass auch zu einem Bewegen des Riegelelements nach radial innen das Einführen des zugeordneten Schlüssels erforderlich sein kann.

Allerdings erfordert die Ausbildung eines Zylinderkerns mit einem solchen zusätzlichen Riegelelement eine spezielle Auslegung des Zylindergehäuses, indem das Zylindergehäuse insbesondere eine zusätzliche Blockiervertiefung für den Eingriff des Riegelelements bereitstellen muss. Da jedoch bestehende Zylindergehäuse in der Regel nicht auf einen solchen zusätzlichen Eingriff eines Riegelelements ausgelegt sind, sondern lediglich Blockiervertiefungen für Plättchenzuhaltungen bereitstellen, können die erwähnten Zylinderkerne mit zusätzlichem Riegelelement nicht rückwärtskompatibel mit beliebigen und bestehenden Zylindergehäusen eingesetzt werden, sondern müssen stets mit einem speziell angefertigten Zylindergehäuse bereitgestellt werden. Hierdurch ist jedoch etwa ein Nachrüsten bestehender Zylinderschlösser mit solchen Zylinderkernen häufig nicht möglich, so dass bei diesen Zylinderschlössern auch der gewünschte Sicherheitsgewinn durch Bereitstellen eines Riegelelements nicht erreicht werden kann.

Daher ist es eine Aufgabe der Erfindung, einen Zylinderkern der erläuterten Art zu schaffen, welcher rückwärtskompatibel mit herkömmlichen Zylindergehäusen einsetzbar ist und eine gegenüber herkömmlichen Zylinderkernen erhöhte Sicherheit gegenüber gewaltsamen Aufbruchsversuchen bietet.

Diese Aufgabe wird gelöst durch einen Zylinderkern mit den Merkmalen des Anspruchs 1.

Bei diesem Zylinderkern ragt das Riegelelement radial aus dem Kerngehäuseabschnitt heraus und ist dazu ausgebildet, in der Blockierstellung in eine zugeordneten Blockiervertiefung des Zylindergehäuses einzugreifen und dadurch eine Drehung des in das Zylindergehäuse eingesetzten Zylinderkerns um die Zylinderachse zu blockieren. Zudem ist jede der mehreren Plättchenzuhaltungen zwischen einer Verriegelungsposition und einer Entriegelungsposition bewegbar und dazu ausgebildet, das Riegelelement in der Verriegelungsposition gegen eine Bewegung in die Freigabestellung zu sperren (und dadurch insbesondere in der Blockierstellung zu sperren) und in der Entriegelungsposition für eine Bewegung (insbesondere aus der Blockierstellung heraus) in die Freigabestellung freizugeben. Darüber hinaus ragen die Plättchenzuhaltungen weder in der Entriegelungsposition noch in der Verriegelungsposition seitlich, insbesondere radial bezüglich der Zylinderachse, aus dem Kerngehäuseabschnitt heraus.

Indem der Zylinderkern somit das erwähnte Riegelelement aufweist, welches in der Blockierstellung aus dem Kerngehäuseabschnitt herausragt, kann der Zylinderkern durch einen Eingriff des Riegelelements in eine Blockiervertiefung des Zylindergehäuses zuverlässig gegen eine Drehung relativ zu dem Zylindergehäuse gesperrt werden. Insofern kann die einleitend erläuterte erhöhte Sicherheit des Zylinderkerns gegenüber einem unbefugten und gewaltsamen Drehen erreicht werden, da der Zylinderkern nicht durch aus dem Kerngehäuseabschnitt herausstehende und schmal ausgebildete Plättchenzuhaltungen, sondern durch ein sich insbesondere über eine in eine Drehrichtung des Zylinderkerns weisende (im Vergleich zu den Plättchenzuhaltungen) größere Fläche in der Blockiervertiefung abstützendes Riegelelement gesichert wird. Insbesondere der Gefahr eines Einschneidens des Zylindergehäuses bei einem gewaltsamen Drehen des Zylinderkerns, welches bei der herkömmlichen ausschließlichen Sicherung des Zylinderkerns durch aus dem Kerngehäuseabschnitt herausstehende Plättchenzuhaltungen droht, kann daher begegnet werden.

Zudem sind die Plättchenzuhaltungen jedoch nach wie vor dazu vorgesehen, den Zylinderkern gegen eine unbefugte Drehung zu sichern und den Zylinderkern derart zu kodieren, dass eine Drehung des Zylinderkerns ausschließlich durch Einführen des zugeordneten Schlüssels und Bewegen der Plättchenzuhaltungen in die Entriegelungsposition möglich ist. Dies erfolgt, in dem das Riegelelement durch die Plättchenzuhaltungen gegen eine Bewegung in die Freigabestellung gesperrt ist, wenn die Plättchenzuhaltungen (oder zumindest eine der Plättchenzuhaltungen) in der Verriegelungsposition positioniert sind. Insbesondere kann das Riegelelement daher durch die in der Verriegelungsposition positionierten Plättchenzuhaltungen in der Blockierstellung sperrbar sein, um hierdurch den Eingriff des Riegelelements in die Blockiervertiefung sichern zu können. Daher kann auch bei dem Zylinderkern der vorliegenden Offenbarung auf die bewährten und zuverlässigen Methoden zur Kodierung des Zylinderkerns durch Plättchenzuhaltungen zurückgegriffen werden.

Allerdings werden die Plättchenzuhaltungen in Abkehr von der herkömmlichen Bauweise derartiger Zylinderkerne und Zylinderschlösser nicht mehr unmittelbar zum Sperren einer Drehung des Zylinderkerns durch einen Eingriff in eine Blockiervertiefung des Zylindergehäuses genutzt, sondern das Sperren der Drehung des Zylinderkerns durch die Plättchenzuhaltungen erfolgt nunmehr indirekt durch das Sperren des Riegelelements gegen eine Bewegung in die Freigabestellung. Hingegen ragen die Plättchenzuhaltungen selbst weder in der Entriegelungsposition noch in der Verriegelungsposition seitlich (oder radial) über den Kerngehäuseabschnitt hinaus und können daher insbesondere auch in der Verriegelungsposition nicht in eine Blockiervertiefung eines Zylindergehäuses eingreifen, so dass eine solche Blockiervertiefung für einen Eingriff der Plättchenzuhaltungen an dem Zylindergehäuse auch nicht bereitgestellt werden muss. Vielmehr können sämtliche Plättchenzuhaltungen sowohl in der Entriegelungsposition als auch in der Verriegelungsposition vollständig innerhalb des Kerngehäuses angeordnet sein und nicht über das Kerngehäuse hinausstehen, so dass eine Drehung des Zylinderkerns auch in der Verriegelungsposition der Plättchenzuhaltungen nicht unmittelbar durch die Plättchenzuhaltungen, sondern unmittelbar lediglich durch das Riegelelement sperrbar ist. Insbesondere können die Plättchenzuhaltungen daher auch in der Verriegelungsposition in keinem direkten mechanischen Kontakt zu dem Zylindergehäuse stehen. Insbesondere kann daher - anders als bei herkömmlichen Zylinderkernen - keine Kraft, die ein Einschneiden in das Zylindergehäuse bewirken könnte, über die Plättchenzuhaltungen auf das Zylindergehäuse übertragbar sein.

Insofern ermöglicht der Zylinderkern gemäß der vorliegenden Offenbarung einerseits eine zuverlässige Sicherung gegenüber unbefugten und gewaltsamen Versuchen eines Drehens des gesperrten Zylinderkerns, indem der Zylinderkern zuverlässig durch das radial aus dem Kerngehäuse herausragende Riegelelement gegen solche Drehungen gesichert sein kann. Darüber hinaus kann jedoch durch das Vermeiden eines Herausstehens der Plättchenzuhaltungen in der Verriegelungsposition auch die gewünschte Rückwärtskompatibilität und ein Nachrüsten herkömmlicher Zylindergehäuse mit dem Zylinderkern der vorliegenden Offenbarung erreicht werden, da in Form des Riegelelements ausschließlich ein einziges Element aus dem Kerngehäuseabschnitt herausragt, um eine Drehung des Zylinderkerns relativ zu einem Zylindergehäuse blockieren zu können. Daher muss ein Zylindergehäuse, in welches der Zylinderkern einsetzbar ist, lediglich eine einzige Blockiervertiefung aufweisen, um den Eingriff des Riegelelements zu ermöglichen und den Zylinderkern verwenden zu können. Da herkömmliche Zylindergehäuse jedoch stets zumindest eine solche Blockiervertiefung für den (herkömmlicherweise vorgesehenen) Eingriff von Plättchenzuhaltungen aufweisen, kann der Zylinderkern der vorliegenden Offenbarung unproblematisch mit beliebigen solcher bestehender Zylindergehäuse eingesetzt werden, indem das Riegelelement zu der zumindest einen ohnehin vorhandenen Blockiervertiefung des Zylindergehäuses ausgerichtet wird. Zudem kann der Zylinderkern auch bei solchen Zylindergehäusen eingesetzt werden, welche sowohl einen Eingriff von Plättchenzuhaltungen als auch eine Eingriff eines zusätzlichen Riegelelements ermöglichen, wobei die herkömmlicherweise für den Eingriff der Plättchenzuhaltungen vorgesehenen Blockiervertiefungen bei einem Einsatz des Zylinders der vorliegenden Offenbarung schlichtweg freibleiben können. Insofern kann durch den Zylinderkern der hierin offenbarten Art die angestrebte Rückwärtskompatibilität zu bestehenden Zylinderschlössern bei erhöhter Sicherheit gegenüber unbefugten Öffnungsversuchen durch gewaltsames Drehen des gesperrten Zylinderkerns erreicht werden.

Die Bezeichnungen "radial" und "axial" beziehen sich im Rahmen der vorliegenden Offenbarung allgemein auf die Zylinderachse, sofern nichts gegenteiliges vermerkt ist.

Weitere Ausführungsformen sind in den abhängigen Ansprüchen, der Beschreibung sowie anhand der Zeichnungen erläutert.

Das Riegelelement kann bei einigen Ausführungsformen in der Freigabestellung in dem Kerngehäuseabschnitt angeordnet sein. Insbesondere kann sich das Riegelelement daher bei solchen Ausführungsformen in der Freigabestellung radial nicht aus dem Kerngehäuseabschnitt heraus erstrecken, so dass der in ein Zylindergehäuse eingesetzte Zylinderkern bei in der Freigabestellung positioniertem Riegelelement für eine Drehung relativ zu dem Zylinderkern freigegeben sein kann. Da das Riegelelement jedoch nur bei in der Entriegelungsposition positionierten Plättchenzuhaltungen für eine Bewegung in die Freigabestellung freigegeben ist, erfordert das Drehen des Zylinderkerns nach wie vor ein Einführen des zugeordneten Schlüssels in den Schlüsselkanal und ein Sortieren der Plättchenzuhaltungen in die Entriegelungsposition, so dass auch bei dem hierin offenbarten Zylinderkern die durch solche Plättchenzuhaltungen erreichbare hohe Sicherheit gegenüber Manipulationsversuchen aufgrund der Möglichkeiten zur Kodierung des Zylinderkerns beibehalten werden können.

Bei einigen Ausführungsformen kann eine Bewegungsrichtung des Riegelelements bei einer Bewegung von der Blockierstellung in die Freigabestellung senkrecht zu einer Bewegungsrichtung der Plättchenzuhaltungen bei einer Bewegung zwischen der Entriegelungsposition und der Verriegelungsposition ausgerichtet sein. Insbesondere kann dadurch erreicht werden, dass bei Aufbringen einer in Richtung der Freigabestellung weisenden Kraft auf das Riegelelement keine in Richtung der Entriegelungsposition weisende Kraft auf die Plättchenzuhaltungen übertragen werden kann, so dass die Plättchenzuhaltungen nicht durch Aufbringen einer solchen Kraft auf das Riegelelement gewaltsam in die Entriegelungsposition gedrängt werden können.

Die Plättchenzuhaltungen können bei einigen Ausführungsformen durch Einführen des zugeordneten Schlüssels in den Schlüsselkanal in die Entriegelungsposition überführbar sein.

Zudem kann bei einigen Ausführungsformen zumindest eine Plättchenzuhaltung der mehreren Plättchenzuhaltungen die Verriegelungsposition einnehmen, wenn der zugeordnete Schlüssel nicht in den Schlüsselkanal eingeführt ist.

Die Plättchenzuhaltungen können bei einigen Ausführungsformen sowohl in der Entriegelungsposition als auch in der Verriegelungsposition vollständig innerhalb des Kerngehäuseabschnitts angeordnet sind.

Bei einigen Ausführungsformen kann der Zylinderkern bei in der Verriegelungsposition positionierten Plättchenzuhaltungen in einer senkrecht zu der Zylinderachse ausgerichteten und durch das Riegelelement führenden Querschnittsebene eine Querschnittsform aufweisen, welche durch einen Kreisbogen und das von dem Kreisbogen radial nach außen weg ragende Riegelelement definiert ist. Insbesondere kann sich der Kreisbogen bei solchen Ausführungsformen von einer sich an den Kerngehäuseabschnitt anschließenden ersten Begrenzung des Riegelelements in Umfangsrichtung bis zu einer der ersten Begrenzung entgegengesetzten sich an den Kerngehäuseabschnitt anschließenden zweiten Begrenzung des Riegelelements erstrecken. Insofern kann die Querschnittsform bei solchen Ausführungsformen mit Ausnahme eines Abschnitts, in welchem sich das Riegelelement erstreckt, vollkommen durch einen Kreisbogen und damit die Form des Kerngehäuseabschnitts beschrieben sein, ohne das weitere Elemente und insbesondere die Plättchenzuhaltungen seitlich oder radial über den Kerngehäuseabschnitt hinausragen.

Die Plättchenzuhaltungen können bei einigen Ausführungsformen in der Verriegelungsposition seitlich, insbesondere radial, weiter außen positioniert sein als in der Entriegelungsposition. Insofern kann die grundsätzlich bekannte Bauart von Zylinderkernen mit Plättchenzuhaltungen auch bei dem Zylinderkern der vorliegenden Offenbarung beibehalten werden, indem die Plättchenzuhaltungen in der Verriegelungsposition seitlich oder radial weiter außen angeordnet sein können als in der Entriegelungsposition und durch Einführen des zugeordneten Schlüssels in den Schlüsselkanal beispielsweise nach (radial) innen in den Kerngehäuseabschnitt bewegbar sein können, um die Entriegelungsposition einzunehmen. Im Unterschied zu herkömmlichen Zylinderkernen können die Plättchenzuhaltungen bei dem hierin offenbarten Zylinderkern jedoch derart dimensioniert und positioniert sein, dass sich die Plättchenzuhaltungen auch an der Verriegelungsposition nicht seitlich (oder radial) über den Kerngehäuseabschnitt hinaus erstrecken.

Grundsätzlich kann bei einigen Ausführungsformen jedoch auch vorgesehen sein, dass die Plättchenzuhaltungen in der Entriegelungsposition seitlich (oder radial) weiter außen in dem Kerngehäuseabschnitt positioniert sind als in der Verriegelungsposition. Bei solchen Ausführungsformen kann daher insbesondere vorgesehen sein, dass die Plättchenzuhaltungen durch Einführen des zugeordneten Schlüssels nach außen in die Entriegelungsposition drängbar sind. Auch solche Ausführungsformen werden erst dadurch ermöglicht, dass bei dem hierin offenbarten Zylinder die Plättchenzuhaltungen in der Verriegelungsposition nicht mehr seitlich zum Blockieren einer Drehung des Zylinderkerns über den Kerngehäuseabschnitt hinausragen müssen, so dass auch eine im Vergleich zu der Entriegelungsposition weiter innenliegende Positionierung der Plättchenzuhaltungen in deren Verriegelungsposition vorgesehen sein kann.

Das Riegelelement kann bei einigen Ausführungsformen in die Freigabestellung vorgespannt und dazu ausgebildet sein, bei in der Entriegelungsposition angeordneten Plättchenzuhaltungen aufgrund der Vorspannung in die Freigabestellung zu gelangen.

Insbesondere kann somit vorgesehen sein, dass nach einem Sortieren der Plättchenzuhaltungen in die Entriegelungsposition das Riegelelement unmittelbar aufgrund einer Vorspannung in die Freigabestellung gelangt, ohne dass eine weitere Krafteinwirkung auf das Riegelelement erforderlich ist. Insofern kann der Zylinderkern bei solchen Ausführungsformen unmittelbar nach Einführen des zugeordneten Schlüssels in den Schlüsselkanal relativ zu dem Zylindergehäuse drehbar sein, ohne dass bei dieser Drehung noch etwaige Kräfte zum Bewegen des Riegelelements in die Freigabestellung überwunden werden müssen. Insbesondere können die Plättchenzuhaltungen daher bei solchen Ausführungsformen dazu ausgebildet sein, in der Entriegelungsposition einen Freiraum für einen Eingriff des Riegelelements bereitzustellen, in welchen das Riegelelement aufgrund der Vorspannung in die Freigabestellung unmittelbar bewegt werden kann, um eine Drehung des Zylinderkerns freizugeben.

Alternativ dazu kann bei einigen Ausführungsformen jedoch auch vorgesehen sein, dass das Riegelelement nach radial außen in die Blockierstellung vorgespannt und dazu ausgebildet ist, bei in der Entriegelungsposition angeordneten Plättchenzuhaltungen infolge einer Drehung des Zylinderkerns in die Freigabestellung gedrängt zu werden. Beispielsweise kann hierzu vorgesehen sein, dass das Riegelelement bei einer Drehung durch einen Kontakt zu einer Begrenzung der Blockiervertiefung und/oder einer Innenfläche des Zylindergehäuses in die Freigabestellung drängbar ist, wenn die Plättchenzuhaltungen in der Entriegelungsposition angeordnet sind.

Bei einigen Ausführungsformen können die Plättchenzuhaltungen eine jeweilige Riegelaufnahmevertiefung aufweisen und das Riegelelement kann einen Eingriffsabschnitt aufweisen, welcher bei in der Entriegelungsposition positionierten Plättchenzuhaltungen in die Riegelaufnahmevertiefungen hineindrängbar ist. Zudem kann das Riegelelement bei solchen Ausführungsformen bei in die Riegelaufnahmevertiefungen eingreifendem Eingriffsabschnitt die Freigabestellung einnehmen.

Beispielsweise kann das Riegelelement aufgrund der vorstehend erwähnten Vorspannung in Richtung der Freigabestellung auch in Richtung der Plättchenzuhaltungen vorgespannt sein, so dass der Eingriffsabschnitt des Riegelelements aufgrund dieser Vorspannung unmittelbar in die Riegelaufnahmevertiefungen gelangen kann, wenn die Plättchenzuhaltungen in die Entriegelungsposition bewegt sind. Insbesondere können die Riegelaufnahmevertiefungen daher durch Bewegen der Plättchenzuhaltungen in die Entriegelungsposition zu dem Eingriffsabschnitt ausrichtbar sein, um ein Eingreifen des Eingriffsabschnitts in die Riegelaufnahmevertiefungen zu ermöglichen.

Bei entgegen der Freigabestellung und in die Blockierstellung vorgespanntem Riegelelement kann zudem beispielsweise vorgesehen sein, dass das Riegelelement infolge einer Drehung des Zylinderkerns entgegen der Vorspannung in die Freigabestellung bewegbar ist, wenn die Plättchenzuhaltungen in der Entriegelungsposition angeordnet sind, so dass der Eingriffsabschnitt durch das Drehen des Zylinderkerns in die entsprechend ausgerichteten Riegelaufnahmevertiefungen drängbar sein kann.

Zudem kann - unabhängig von der Art des Hineindrängens des Riegelelements in die Riegelaufnahmevertiefungen (Vorspannung in die Freigabestellung oder Überwinden einer Vorspannung in die Blockierstellung bei Drehen des Zylinderkerns) - vorgesehen sein, dass das Riegelelement bei nicht in der Entriegelungsposition und insbesondere in der Verriegelungsposition positionierten Plättchenzuhaltungen mit dem Eingriffsabschnitt an einem gegenüber der Riegelaufnahmevertiefung erhöhtem Abschnitt einer betreffenden Plättchenzuhaltung anschlägt und/oder anliegt, wobei hierdurch eine Bewegung des Riegelelements in die Freigabestellung unterbunden sein kann.

Bei einigen Ausführungsformen kann der Eingriffsabschnitt ferner länglich ausgebildet sein und sich parallel zu der Zylinderachse erstrecken, wobei die Riegelaufnahmevertiefungen in der Entriegelungsposition der Plättchenzuhaltungen entlang und/oder parallel zu der Zylinderachse aufgereiht sein können. Insbesondere können die Riegelaufnahmevertiefungen in der Entriegelungsposition der Plättchenzuhaltungen daher einen sich entlang der Zylinderachse erstreckenden Riegelaufnahmekanal bilden, in welchen der Eingriffsabschnitt des Riegelelements eingreifen kann, um das Riegelelement in den Kerngehäuseabschnitt hinein bewegen und aus der Blockiervertiefung des Zylindergehäuses heraus bewegen zu können. Daher können die Plättchenzuhaltungen bei solchen Ausführungsformen durch Einführen des zugeordneten Schlüssels in den Schlüsselkanal und Bewegen der Plättchenzuhaltungen in die Entriegelungsposition insbesondere derart zueinander ausrichtbar sein, dass die Riegelaufnahmevertiefungen einen sich entlang der Zylinderachse oder parallel hierzu erstreckenden Riegelaufnahmekanal bilden, in welchen der längliche Eingriffsabschnitt des Riegelelements eingreifen kann, um hierdurch das Riegelelement für eine Bewegung in die Freigabestellung freigeben zu können.

Bei einigen Ausführungsformen können die Plättchenzuhaltungen jeweilige sich an die Riegelaufnahmevertiefungen anschließende Verriegelungsabschnitte aufweisen. Das Riegelelement kann bei solchen Ausführungsformen ferner an dem jeweiligen Verriegelungsabschnitt einer in der Verriegelungsposition angeordneten Plättchenzuhaltung anliegen und eine Bewegung des Riegelelements nach radial innen (insbesondere in die Freigabestellung) kann durch das Anliegen an dem jeweiligen Verriegelungsabschnitt gesperrt sein.

Insbesondere kann es sich bei den Verriegelungsabschnitten um die vorstehend erwähnten erhöhten Abschnitte der Plättchenzuhaltungen handeln, welche sich an die Riegelaufnahmevertiefungen anschließen können. Die Riegelaufnahmevertiefungen können daher nach radial innen weisende Vertiefungen gegenüber den Verriegelungsabschnitten darstellen, so dass das Riegelelement für eine Bewegung nach radial innen in die Freigabestellung freigegeben sein kann, wenn sich sämtliche Riegelaufnahmevertiefungen der Plättchenzuhaltungen in Flucht zu dem Eingriffsabschnitt des Riegelelements befinden. Ist hingegen zumindest eine Plättchenzuhaltung nicht in der Verriegelungsposition angeordnet, kann der Eingriffsabschnitt des Riegelelements an dem Verriegelungsabschnitt der betreffenden Plättchenzuhaltung anliegen und hierdurch gegen eine Bewegung in die Freigabestellung gesperrt sein.

Die Plättchenzuhaltungen können bei einigen Ausführungsformen in die Verriegelungsposition vorgespannt sein. Insbesondere können die Plättchenzuhaltungen hierbei nach radial außen vorgespannt sein. Zudem kann bei solchen Ausführungsformen vorgesehen sein, dass die Plättchenzuhaltungen durch Einführen des zugeordneten Schlüssels entgegen der Vorspannung in die Entriegelungsposition drängbar sind, insbesondere nach radial innen.

Darüber hinaus kann bei einigen Ausführungsformen vorgesehen sein, dass entlang der Zylinderachse aufeinanderfolgend angeordnete Plättchenzuhaltungen in zueinander entgegengesetzte Richtungen nach radial außen in die Verriegelungsposition vorgespannt sind. Ein Sortieren der Plättchenzuhaltungen in die Entriegelungsposition kann daher gegebenenfalls Bewegungen benachbarter Plättchenzuhaltungen in zueinander entgegengesetzten Richtungen erfordern. Grundsätzlich kann bei einigen Ausführungsformen jedoch auch vorgesehen sein, dass die Plättchenzuhaltungen entlang einer gemeinsamen Richtung von der Verriegelungsposition in die Entriegelungsposition bewegbar sind und/oder in dieselbe Richtung vorgespannt sind.

Die Plättchenzuhaltungen können bei einigen Ausführungsformen jeweilige Sortierabschnitte aufweisen und durch Zusammenwirken der Sortierabschnitte mit einer Sortierstruktur des zugeordneten Schlüssels aus der Verriegelungsposition in die Entriegelungsposition bewegbar sein. Derartige Sortierabschnitte können beispielsweise in den Schlüsselkanal hineinragen, um etwa mit Begrenzungen eines an einem Schlüsselschaft des zugeordneten Schlüssels ausgebildeten Sortierkanals zusammenwirken und durch die Begrenzungen des Sortierkanals in die Entriegelungsposition angetrieben werden zu können. Insbesondere können die Plättchenzuhaltungen durch das Zusammenwirken der Sortierabschnitte mit der Sortierstruktur entgegen der vorstehend erwähnten Vorspannung in die Verriegelungsposition zurückdrängbar sein, wenn der zugeordnete Schlüssel in den Schlüsselkanal eingeführt wird.

Bei einigen Ausführungsformen kann das Riegelelement zumindest einen Blockierabschnitt mit einer in der Blockierstellung des Riegelelements aus dem Kerngehäuseabschnitt herausragenden Blockierfläche zum Blockieren der Drehung des Zylinderkerns aufweisen. Die Blockierfläche kann insbesondere in eine Drehrichtung weisen, in welche der Zylinderkern zum Öffnen des Zylinderschlosses drehbar ist, um durch Anliegen an einer Begrenzung der Blockiervertiefung in der Blockierstellung eine solche Drehung unterbringen zu können.

Die Blockierfläche kann bei einigen Ausführungsformen eine Blockierbreite entlang der Zylinderachse aufweisen und die Plättchenzuhaltungen können eine Plättchenbreite entlang der Zylinderachse aufweisen. Die Blockierbreite kann bei solchen Ausführungsformen zumindest doppelt so groß sein wie die Plättchenbreite, insbesondere jedoch zumindest dreimal oder zumindest viermal so groß wie die Plättchenbreite.

Indem die Blockierbreite der Blockierfläche entlang der Zylinderachse somit größer sein kann als die Plättchenbreite, kann ein flächiges Anliegen der Blockierfläche an einer Begrenzung der Blockiervertiefung des Zylindergehäuses erreicht werden, so dass das einleitend erwähnte Einschneiden in das Zylindergehäuse, welches bei einem Blockieren der Drehung durch die lediglich schmal ausgebildeten Plättchenzuhaltungen droht, aufgrund der Sicherung durch das Riegelelement verhindert werden kann. Insofern kann eine sichere und zuverlässige Verriegelung des Zylinderschlosses ermöglicht werden.

Der Blockierabschnitt kann bei einigen Ausführungsformen symmetrisch bezüglich einer die Zylinderachse umfassenden, radial ausgerichteten und mittig durch das Riegelelement führenden Symmetrieebene ausgebildet sein. Dies kann es insbesondere ermöglichen, das Riegelelement im Hinblick auf Drehungen des Zylinderkerns in entgegengesetzten Drehrichtungen um die Zylinderachse in identischer Weise zum Blockieren einer solchen Drehung einsetzen zu können, so dass der Zylinderkern bei in beliebiger Drehrichtung zu öffnenden Zylinderschlössern eingesetzt werden kann. Auch hierdurch kann eine umfassende Kompatibilität mit bestehenden Zylinderschlössern erreicht werden, da der Zylinderkern somit nicht auf eine bestimmte Drehrichtung zum Öffnen des Zylinderschlosses festgelegt ist.

Allgemein kann der Blockierabschnitt daher zwei einander entgegengesetzte Blockierflächen aufweisen, um Drehungen des Zylinderkerns relativ zu einem Zylindergehäuse in einander entgegengesetzten Drehrichtungen verhindern zu können.

Das Riegelelement kann bei einigen Ausführungsformen den zumindest einen Blockierabschnitt und einen entlang der Zylinderachse zu dem zumindest einen Blockierabschnitt versetzten zweiten Blockierabschnitt aufweisen. Der erste Blockierabschnitt und der zweite Blockierabschnitt können insbesondere eine jeweilige Blockierfläche aufweisen, so dass eine Drehung des Zylinderkerns an bezüglich der Zylinderachse zueinander beabstandeten Punkten durch die jeweiligen Blockierabschnitte oder deren Blockierflächen blockierbar sein kann. Auch hierdurch kann die Zuverlässigkeit der durch den Zylinderkern zu erreichenden Verriegelung erhöht werden.

Das Riegelelement kann bei einigen Ausführungsformen einen Verbindungsabschnitt aufweisen, welcher die Blockierabschnitte innerhalb des Kerngehäuseabschnitts miteinander verbindet. Auch hierdurch kann eine stabile Verriegelung ermöglicht werden, indem etwaige bei einem Versuch einer gewaltsamen Drehung des Zylinderkerns aufgebrachte Kräfte über den Verbindungsabschnitt auf beide Blockierabschnitte und über die beiden Blockierabschnitte an zwei beabstandeten Punkten auf das Zylindergehäuse abgeleitet werden können.

Das Kerngehäuse kann bei einigen Ausführungsformen einen zwischen den Blockierabschnitten angeordneten Stützabschnitt aufweisen und das Riegelelement kann durch eine an dem Stützabschnitt abgestützte Vorspanneinrichtung, insbesondere eine Feder, in die Freigabestellung vorgespannt sein.

Insbesondere kann sich eine solche Vorspanneinrichtung an dem Stützabschnitt sowie dem vorstehend erwähnten Verbindungsabschnitt abstützen, so dass eine Feder beispielsweise zwischen dem Stützabschnitt und dem Verbindungsabschnitt gespannt sein kann, um das Riegelelement hierdurch gegenüber dem Kerngehäuse in die Freigabestellung nach radial innen vorspannen zu können.

Insbesondere kann sich der Stützabschnitt brückenartig in einer an dem Kerngehäuseabschnitt ausgebildeten Blockieraussparung erstrecken, aus welcher das Riegelelement und insbesondere dessen Blockierabschnitte in der Blockierstellung herausragen. Zudem kann der Stützabschnitt insbesondere den vorstehend erwähnten Verbindungsabschnitt des Riegelelements übergreifen, um eine Abstützung der Vorspanneinrichtung an dem Verbindungsabschnitt und dem Stützabschnitt zu ermöglichen. Ferner kann der Stützabschnitt beispielsweise als ein gesondertes Stützelement in die Blockieraussparung eingesetzt sein oder das Kerngehäuse kann zwei Blockieraussparungen aufweisen, durch welche die beiden Blockierabschnitte in der Blockierstellung hindurchtreten, wobei der Stützabschnitt durch einen die beiden Blockieraussparungen voneinander trennenden Abschnitt des zylinderförmigen Kerngehäuses ausgebildet sein kann.

Der Kerngehäuseabschnitt kann bei einigen Ausführungsformen eine Blockieraussparung aufweisen, durch welche das Riegelelement in der Blockierstellung radial herausragt, und der Stützabschnitt kann ein die Blockieraussparung zwischen den Blockierabschnitten überdeckendes Stützblech aufweisen, wobei das Stützblech insbesondere Umkantungen zur Ableitung radial nach außen wirkender Kräfte auf das Kerngehäuse aufweisen kann. Insbesondere kann der Stützabschnitt als ein solches Stützblech ausgebildet sein.

Insbesondere kann ein solches Stützblech als ein zusätzliches Bauteil im Zuge einer Montage des Zylinderkerns von innen in das Kerngehäuse eingesetzt sein und hierdurch die Blockieraussparung in zwei Teilaussparungen unterteilen, durch welche die jeweiligen Blockierabschnitte hindurchtreten können. Ferner kann ein solches Stützblech insbesondere durch Umkantungen an Begrenzungen der Blockieraussparung gegen eine Bewegung nach radial nach außen aus der Blockieraussparung heraus abgestützt sein, um hierdurch eine Abstützung für eine Vorspanneinrichtung zum Vorspannen des Riegelelements nach radial innen bereitstellen zu können. Eine solche Ausbildung des Stützabschnitts kann daher eine einfache Herstellung und Montage des Zylinderkerns ermöglichen, indem lediglich eine einzige Blockieraussparung in dem Kerngehäuseabschnitt gebildet und ein Stützblech werkzeuglos in das Kerngehäuse eingesetzt werden muss, um die erwünschte Unterteilung für den Durchtritt zweier Blockierabschnitte und eine Vorspannung des Riegelelements in die Freigabestellung erreichen zu können.

Zudem kann der Zylinderkern bei einigen Ausführungsformen den zugeordneten Schlüssel umfassen. Der zugeordnete Schlüssel kann insbesondere als Wendeschlüssel ausgebildet sein. Ferner kann ein als Wendeschlüssel ausgebildeter Schlüssel insbesondere einen Schlüsselschaft mit zwei Breitseiten und zwei Schmalseiten aufweisen, wobei eine Sortierstruktur zum Sortieren der Plättchenzuhaltungen in die Entriegelungsposition als ein an den Breitseiten ausgebildeter Sortierkanal ausgebildet sein kann.

Die Erfindung betrifft darüber hinaus ein Zylinderschloss, welches ein Zylindergehäuse und einen Zylinderkern gemäß der vorliegenden Offenbarung umfasst.

Das Zylindergehäuse kann zudem insbesondere unmittelbar in eine Einbauumgebung des Zylinderschlosses integriert sein. Beispielsweise kann das Zylindergehäuse daher von einem Griff eines Behältnisses, einer Tür oder einer Klappe oder von einem Deckel, beispielsweise einem Tankdeckel, gebildet sein. Jedoch kann auch vorgesehen sein, dass das Zylindergehäuse eigens für das Zylinderschloss bereitgestellt und in eine Einbauumgebung einsetzbar ist, indem das Zylinderschloss etwa als ein Einsteckschloss zum Einsetzen in ein Türblatt ausgebildet sein kann.

Das Zylindergehäuse kann bei einigen Ausführungsformen einen Kernaufnahmeabschnitt aufweisen, in welchem der Zylinderkern um die Zylinderachse drehbar gelagert ist, und das Zylindergehäuse kann eine Blockiervertiefung aufweisen, in welche das Riegelelement in der Blockierstellung eingreift. Ferner kann eine Drehung des Zylinderkerns um die Zylinderachse durch den Eingriff des Riegelelements in die Blockiervertiefung gesperrt sein.

Der Zylinderkern kann bei einigen Ausführungsformen mit einem Antriebsabschnitt drehwirksam verbunden sein, durch welchen ein Verriegelungselement infolge einer Drehung des Zylinderkerns antreibbar sein kann. Beispielsweise kann sich ein solcher Antriebsabschnitt axial bezüglich der Zylinderachse über den Kerngehäuseabschnitt hinaus erstrecken, um in Kontakt zu dem Verriegelungselement gelangen zu können. Das Verriegelungselement kann beispielsweise als ein durch Drehen des Zylinderkerns schwenkbarer Riegel ausgebildet sein.

Bei einigen Ausführungsformen kann die Drehung des Zylinderkerns ausschließlich durch den Eingriff des Riegelelements in die Blockiervertiefung gesperrt sein. Insbesondere kann bei solchen Ausführungsformen somit vorgesehen sein, dass die Drehung des Zylinderkerns nicht durch aus dem Kerngehäuseabschnitt hinausstehende Plättchenzuhaltungen gesperrt ist, da die Plättchenzuhaltungen sowohl in der Entriegelungsposition als auch in der Verriegelungsposition innerhalb des Kerngehäuses angeordnet sein können.

Das Zylindergehäuse kann bei einigen Ausführungsformen eine der Blockiervertiefung entgegengesetzte zweite Blockiervertiefung aufweisen. Insbesondere kann das Zylindergehäuse somit auch dazu ausgelegt sein, einen herkömmlichen Zylinderkern mit in der Verriegelungsposition in entgegengesetzten Richtungen aus einem Kerngehäuseabschnitt herausragenden Plättchenzuhaltungen aufzunehmen. Bei dem Zylindergehäuse kann es sich somit grundsätzlich um ein bereits bestehendes und herkömmliches Zylindergehäuse handeln, wobei der vorliegend offenbarte Zylinderkern jedoch aufgrund der erwähnten Rückwärtskompatibilität auch einen Einsatz in einem solchen Zylindergehäuse ermöglicht.

Die einander entgegengesetzten Blockiervertiefungen können insbesondere um 180° bezüglich der Zylinderachse zueinander versetzt sein.

Das Zylindergehäuse kann bei einigen Ausführungsformen keine weitere Blockiervertiefung für einen Eingriff von Plättchenzuhaltungen und/oder eines weiteren Riegelelements aufweisen.

Insofern kann das Zylindergehäuse insbesondere nicht dafür geeignet sein, einen Zylinderkern aufzunehmen, bei welchem sowohl die Plättchenzuhaltungen in der Verriegelungsposition seitlich und zueinander entgegengesetzt aus einem Kerngehäuseabschnitt herausstehen als auch ein Riegelelement zur zusätzlichen Sicherung des Zylinderkerns gegen gewaltsame Drehungen vorgesehen ist, da das Zylindergehäuse die dazu erforderlichen drei Blockiervertiefungen nicht zur Verfügung stellt. Hingegen ermöglicht der Zylinderkern gemäß der vorliegenden Offenbarung aufgrund der auch in der Verriegelungsposition nicht über den Kerngehäuseabschnitt hinausragenden Plättchenzuhaltungen den Einsatz in einem solchen Zylindergehäuse.

Das Zylindergehäuse kann bei einigen Ausführungsformen von einem Tankdeckel für einen Fahrzeugtank gebildet sein.

Die Erfindung betrifft ferner ein Schließsystem, welches ein erstes Zylindergehäuse, ein zweites Zylindergehäuse und einen Zylinderkern gemäß der vorliegenden Offenbarung umfasst, wobei der Zylinderkern wahlweise in das erste Zylindergehäuse oder in das zweite Zylindergehäuse einsetzbar ist.

Insbesondere können bei dem Schließsystem verschiedenartige Zylindergehäuse, beispielsweise ein Zylindergehäuse für einen Tankdeckel und ein Zylindergehäuse für eine Fahrzeugtür, bereitgestellt sein, wobei der Zylinderkern aufgrund dessen Rückwärtskompatibilität problemlos in solche verschiedenartigen Zylindergehäuse einsetzbar sein kann.

Das erste Zylindergehäuse und das zweite Zylindergehäuse können sich bei einigen Ausführungsformen voneinander unterscheiden, wobei jedoch sowohl das erste Zylindergehäuse als auch das zweite Zylindergehäuse einen Kerngehäuseabschnitt aufweisen kann, in welchen der Zylinderkern um die Zylinderachse drehbar gelagert einsetzbar ist. Zudem können sowohl das erste Zylindergehäuse als auch das zweite Zylindergehäuse eine Blockiervertiefung aufweisen, in welche das Riegelelement des eingesetzten Zylinderkerns in der Blockierstellung eingreift, wobei eine Drehung des Zylinderkerns um die Zylinderachse durch den Eingriff des Riegelelements in die Blockiervertiefung gesperrt sein kann.

Da der Zylinderkern ausschließlich eine Blockiervertiefung an dem Zylindergehäuse erfordert, in welche das Riegelelement in der Blockierstellung eingreifen kann, müssen die beiden sich voneinander unterscheidenden Zylindergehäuse somit ausschließlich diese Mindestanforderung erfüllen und können davon abgesehen frei gestaltet sein, um den Einsatz des Zylinderkerns zu ermöglichen. Insbesondere können die beiden Zylindergehäuse auch einander entgegengesetzte Blockiervertiefungen aufweisen, die herkömmlicherweise für den Eingriff von Plättchenzuhaltungen vorgesehen sein können. Bei dem Einsatz des hierin offenbarten Zylinderkerns kann hingegen eine dieser Blockiervertiefungen für den Eingriff des Riegelelements genutzt werden, wohingegen die entgegengesetzte Blockiervertiefung freibleiben kann, ohne dass dies mit Sicherheitseinbußen einhergeht.

Das erste Zylindergehäuse kann bei einigen Ausführungsformen eine der Blockiervertiefung entgegengesetzte zweite Blockiervertiefung, jedoch keine zwischen den Blockiervertiefungen gelegene weitere Blockiervertiefung aufweisen. Das zweite Zylindergehäuse kann hingegen eine der Blockiervertiefung entgegengesetzte zweite Blockiervertiefung sowie eine zwischen den Blockiervertiefungen gelegene dritte Blockiervertiefung aufweisen.

Insofern kann das erste Zylindergehäuse nicht dazu ausgelegt sein, einen Zylinderkern aufzunehmen, bei welchem sowohl entgegengesetzt zueinander bewegbare und in der Verriegelungsposition über das Kerngehäuse hinausstehende Plättchenzuhaltungen als auch ein zusätzliches Riegelelement zur weitergehenden Sicherung des Zylinderkerns gegen gewaltsame Drehungen aufzunehmen, wohingegen bei dem zweiten Zylindergehäuse ein solcher Zylinderkern grundsätzlich aufnehmbar wäre. Da der Zylinderkern gemäß der vorliegenden Offenbarung jedoch lediglich eine einzige Blockiervertiefung für den Eingriff des Riegelelements erfordert, kann der Zylinderkern problemlos sowohl in dem ersten Zylindergehäuse als auch in dem zweiten Zylindergehäuse eingesetzt werden.

Die Erfindung wird im Folgenden rein beispielhaft anhand von Ausführungsbeispielen unter Bezugnahme auf die Zeichnungen erläutert.

Es zeigen:
- Fig. 1: ein Zylinderschloss mit einem in ein Zylindergehäuse eingesetzten Zylinderkern, welcher durch einen in einen Schlüsselkanal eingeführten Schlüssel um eine Zylinderachse drehbar ist,
- Fig. 2A und 2B: eine perspektivische Ansicht sowie eine Draufsicht auf das Zylindergehäuse, welches beispielhaft als ein Tankdeckel ausgebildet ist,
- Fig. 3A und 3B: eine jeweilige Darstellung des Zylinderkerns bei sich in einer Blockierstellung befindlichem Riegelelement, durch welches eine Drehung des Zylinderkerns in dem Zylindergehäuse sperrbar ist,
- Fig. 4: eine Darstellung von mit dem Riegelelement zusammenwirkenden Plättchenzuhaltungen, welche das Riegelelement in einer Entriegelungsposition für eine Bewegung in eine Freigabestellung freigeben, in welcher der Zylinderkern relativ zu dem Zylindergehäuse drehbar ist,
- Fig. 5: eine Darstellung zur Veranschaulichung einer Vorspannung des Riegelelements in die Freigabestellung,
- Fig. 6A bis 6C: eine Darstellung des zugeordneten Schlüssels und des Zylinderkerns, eine perspektivische Darstellung des Zylinderkerns bei eingeführtem zugeordnetem Schlüssel und in der Freigabestellung angeordnetem Riegelelement sowie eine Darstellung des in der Freigabestellung angeordneten Riegelelements sowie in einer Entriegelungsposition angeordneten Plättchenzuhaltungen,
- Fig. 7: eine Rückansicht auf das Zylindergehäuse bei eingesetztem Zylinderkern und
- Fig. 8: eine Darstellung eines Schließsystems mit zwei verschiedenen Zylindergehäusen und dem Zylinderkern.

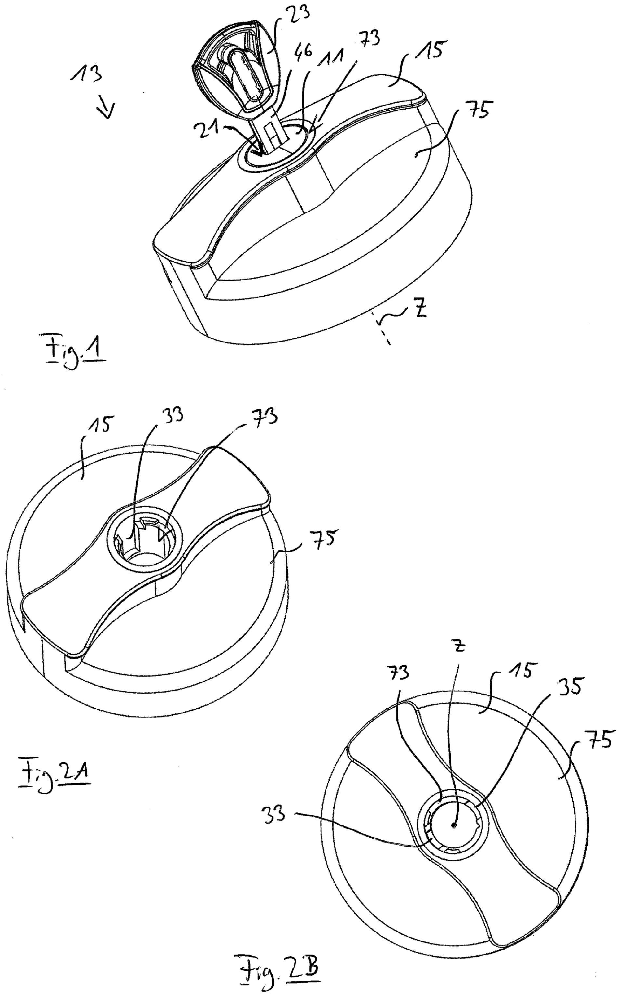

Fig. 1 zeigt eine schematische Ansicht eines Zylinderschlosses 13, welches ein als Tankdeckel 75 ausgebildetes Zylindergehäuse 15 sowie einen in einem Kernaufnahmeabschnitt 73 des Zylindergehäuses 15 eingesetzten Zylinderkern 11 aufweist. Der Zylinderkern 11 erstreckt sich entlang einer Zylinderachse Z und weist einen Schlüsselkanal 21 auf, in welchen in der Darstellung der Fig. 1 ein Schlüsselschaft 46 eines zugeordneten Schlüssels 23 eingeführt ist. Wie nachstehend noch näher erläutert ist, ist der Zylinderkern 11 durch Einführen des zugeordneten Schlüssels 23 in den Schlüsselkanal 21 für eine Drehung um die Zylinderachse Z relativ zu dem Zylindergehäuse 15 freigebbar, um durch ein solches Drehen etwa ein Lösen des Tankdeckels 75 von einem durch den Tankdeckel 75 verschließbaren, nicht gezeigten Fahrzeugtank zu ermöglichen. Ist der zugeordnete Schlüssel 23 hingegen nicht in den Schlüsselkanal 21 eingeführt, ist der Zylinderkern 11 gegen eine Drehung relativ zu dem Zylindergehäuse 15 gesperrt.

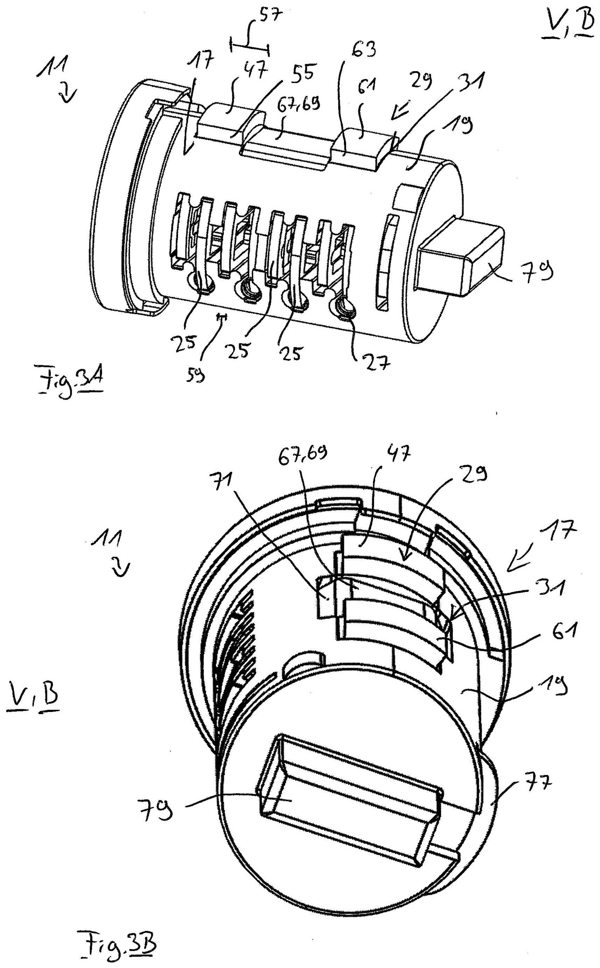

Die Fig. 2A und 2B veranschaulichen das Zylindergehäuse 15 weitergehend, wobei insbesondere ersichtlich ist, dass das Zylindergehäuse 15 zwei sich radial bezüglich der Zylinderachse Z an den Kernaufnahmeabschnitt 73 anschließende und entgegengesetzt zueinander angeordnete Blockiervertiefungen 33 und 35 aufweist. Wie ebenfalls noch nachstehend näher erläutert ist, ermöglichen diese Blockiervertiefungen 33 und 35 einen Eingriff eines Riegelelements 29 des Zylinderkerns 11, um eine Drehung des Zylinderkern 11 in dem Zylindergehäuse 15 zu blockieren, wenn nicht der zugeordnete Schlüssel 23 in den Schlüsselkanal 21 eingeführt ist. (vgl. hierzu insbesondere auch Fig. 3A und 3B).

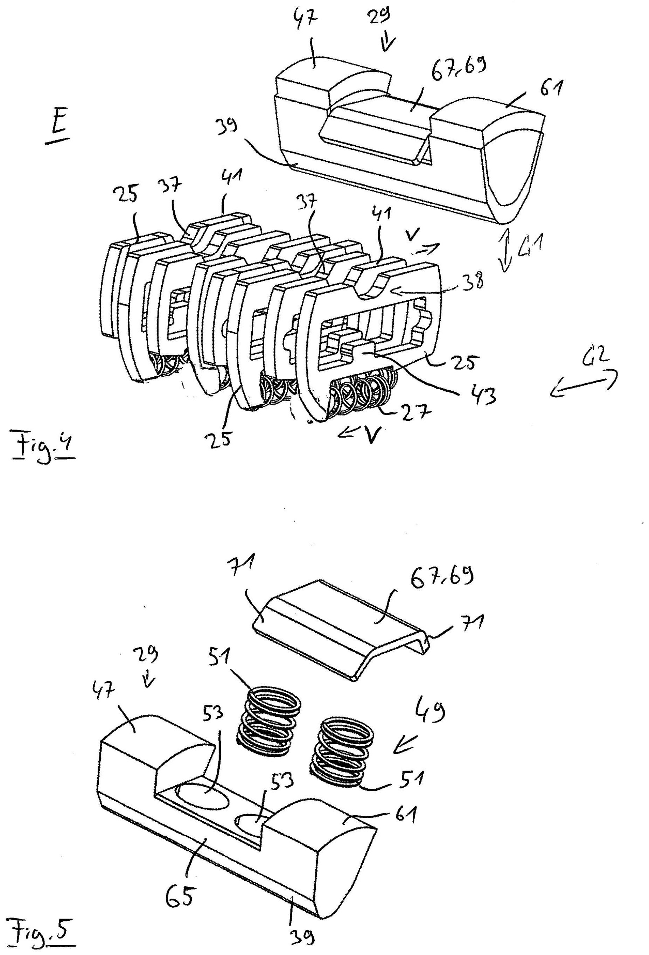

Wie insbesondere die Fig. 3A und 3B veranschaulichen, weist der Zylinderkern 11 ein Kerngehäuse 17 mit einem zylindrischen Kerngehäuseabschnitt 19 auf, in welchem mehrere Plättchenzuhaltungen 25 angeordnet sind (vgl. auch Fig. 4). Die Plättchenzuhaltungen 25 sind durch jeweilige Federn 27 in eine in den Fig. 3A und 3B veranschaulichte Verriegelungsposition V nach radial außen bezüglich der Zylinderachse Z vorgespannt, jedoch durch Einführen des zugeordneten Schlüssels 23 in den Schlüsselkanal 21 entlang einer Bewegungsrichtung C2 entgegen der Vorspannung in eine Entriegelungsposition E bewegbar. Insbesondere sind aufeinanderfolgende Plättchenzuhaltungen 25 hierbei in einander entgegengesetzte Richtungen nach radial außen vorgespannt, so dass die Plättchenzuhaltungen 25 bei einer Bewegung in die Entriegelungsposition E in einander entgegengesetzte Richtungen nach radial innen bewegt werden.

Wie die Fig. 3A und 3B ferner zeigen, erstrecken sich die Plättchenzuhaltungen 25 jedoch in der Verriegelungsposition V seitlich (oder radial) nicht über den zylindrischen Kerngehäuseabschnitt 19 hinaus, sondern sind in der Verriegelungsposition V vollständig innerhalb des Kerngehäuseabschnitts 19 angeordnet. Da die Plättchenzuhaltungen 25 somit in der Verriegelungsposition V nicht seitlich aus dem Kerngehäuseabschnitt 19 herausstehen, können die Plättchenzuhaltungen 25 nicht in die erwähnten Blockiervertiefungen 33 und 35 des Zylindergehäuses 15 eingreifen, um eine Drehung des Zylinderkerns 11 relativ zu dem Zylindergehäuse 15 zu verhindern. Gleichwohl ist der in das Zylindergehäuse 15 eingesetzte Zylinderkern 11 bei in der Verriegelungsposition V positionierten Plättchenzuhaltungen 25 durch die Plättchenzuhaltungen 25 gegen eine Drehung relativ zu dem Zylindergehäuse 15 gesichert und zum Freigeben einer Drehung des Zylinderkerns 11 ist es erforderlich, den zugeordneten Schlüssel 23 in den Schlüsselkanal 21 einzuführen und die Plättchenzuhaltungen 25 in die erwähnte Entriegelungsstellung E zu überführen.

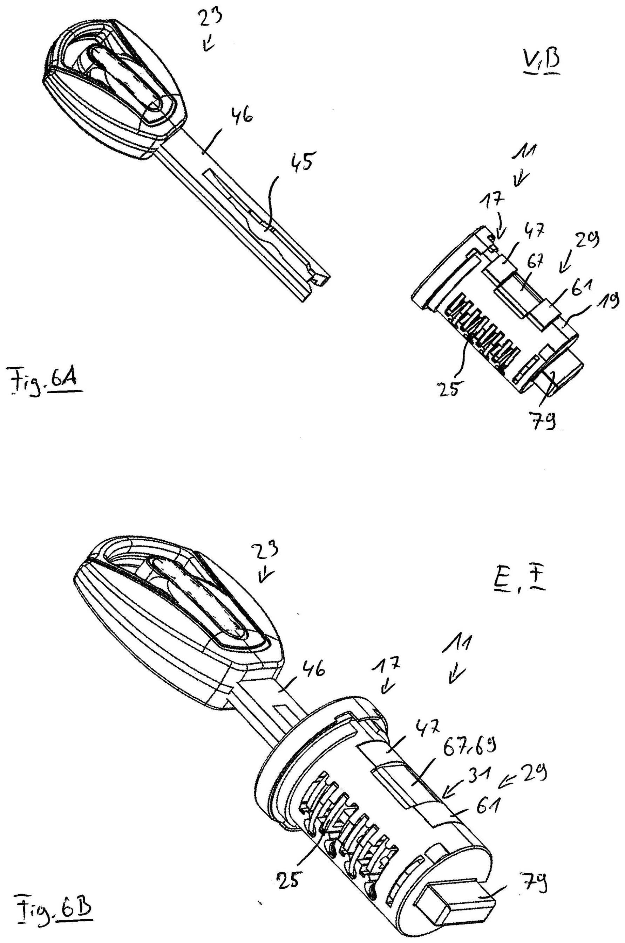

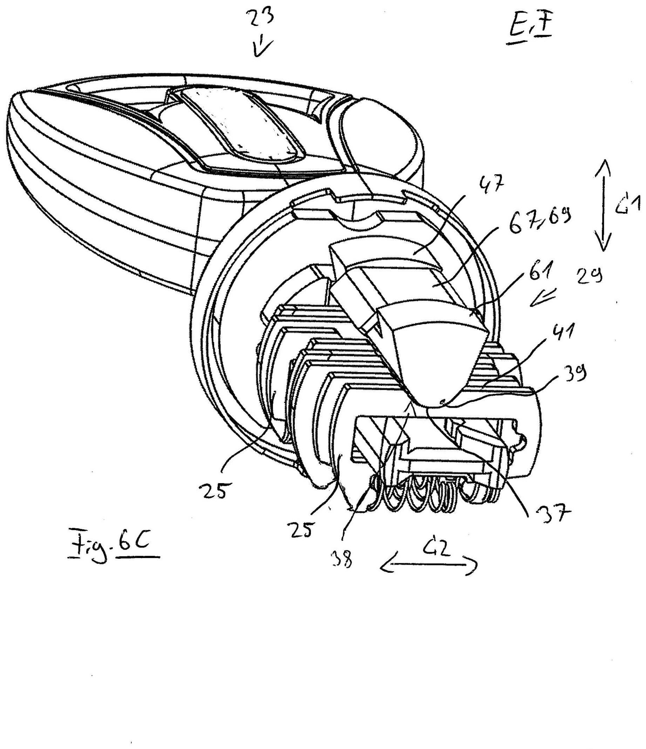

Diese Sicherung des Zylinderkerns 11 gegen unbefugte Drehungen wird dadurch erreicht, dass bei in der Verriegelungsposition V befindlichen Plättchenzuhaltungen 25 das bereits erwähnte Riegelelement 29 des Zylinderkerns 11 durch die Plättchenzuhaltungen 25 in einer Blockierstellung B gesichert ist, in welcher das Riegelelement 29 radial bezüglich der Zylinderachse Z aus einer Blockieraussparung 31 des Kerngehäuseabschnitts 19 heraussteht, um in eine der Blockiervertiefungen 33 oder 35 einzugreifen. Da die Plättchenzuhaltungen 25 in der Verriegelungsposition V das Riegelelement 29 gegen eine Bewegung nach radial innen in eine anhand der Fig. 6B und 6C veranschaulichte Freigabestellung F sperren, kann der Zylinderkern 11 somit nicht relativ zu dem Zylindergehäuse 15 gedreht werden, wenn die Plättchenzuhaltungen 25 die Verriegelungsposition V einnehmen. Durch Einführen des zugeordneten Schlüssels 23 in den Schlüsselkanal 21 können die Plättchenzuhaltungen 25 hingegen in die erwähnte Entriegelungsposition E gebracht werden, in welcher die Plättchenzuhaltungen 25 das Riegelelement 29 für eine Bewegung aus der Blockiervertiefung 33 oder 35 heraus nach radial innen in die Freigabestellung F freigeben, so dass durch Einführen des zugeordneten Schlüssels 23 eine Drehung des Zylinderkerns 11 freigebbar und bewirkbar ist.

Anders als bei herkömmlichen Zylinderschlössern dienen bei dem hierin offenbarten Zylinderkern 11 die Plättchenzuhaltungen 25 somit nicht unmittelbar dazu, eine Drehung des Zylinderkerns 11 durch einen Eingriff in eine Blockiervertiefung 33 oder 35 zu verhindern, sondern die Plättchenzuhaltungen 25 werden lediglich indirekt zu einem solchen Blockieren eingesetzt, indem die Plättchenzuhaltungen 25 in der Verriegelungsposition V das Riegelelement 29 in der Blockierstellung B sperren und hierdurch einen Eingriff des Riegelelements 29 in eine der Blockiervertiefungen 33 und 35 sicherstellen. Insofern erfolgt die unmittelbare Verriegelung des Zylinderkerns 11 in dem Zylindergehäuse 15 bei der veranschaulichten Ausführungsform durch das Riegelelement 29.

Wie ferner in Fig. 3A veranschaulicht ist, weist das Riegelelement 29 zwei in der Blockierstellung B aus der Blockieraussparung 31 herausragende Blockierabschnitte 47 und 61 auf, welche eine jeweilige in eine Drehrichtung des Zylinderkerns 11 weisende Blockierfläche 55 und 63 aufweisen, mit welcher die Blockierabschnitte 47 und 61 in der Blockierstellung B an Begrenzungen einer der Blockiervertiefungen 33 oder 35 anschlagen, wenn der Zylinderkern 11 ohne vorhergehendes Überführen der Plättchenzuhaltungen 25 in die Entriegelungsposition E in Drehung versetzt wird. Hierbei weisen die Blockierflächen 55 und 61 entlang der Zylinderachse Z eine Blockierbreite 57 auf, welche um ein Vielfaches größer ist als eine Plättchenbreite 59 der Plättchenzuhaltungen 25. Daher ermöglichen die Blockierabschnitte 47 und 61 und damit das Riegelelement 29 ein flächiges Anliegen an Begrenzungen der jeweiligen Blockiervertiefung 33 oder 35, so dass im Unterschied zu einer unmittelbaren Verriegelung durch in eine Blockiervertiefung eingreifende Plättchenzuhaltungen keine Möglichkeit besteht, durch gewaltsames Drehen des Zylinderkerns 11 in das Zylindergehäuse 15 einzuschneiden. Durch das Verriegeln des Zylinderkerns 11 mittels des Riegelelements 29 kann somit eine gegenüber herkömmlichen Zylinderkernen mit einem direkten Eingriff von Plättchenzuhaltungen in Blockiervertiefungen zuverlässigere Verriegelung erreicht werden.

Darüber hinaus kann durch die Anordnung der Plättchenzuhaltungen 25 innerhalb des Kerngehäuseabschnitts 19 in der Verriegelungsposition V erreicht werden, dass sich ausschließlich das Riegelelement 29 radial über den Kerngehäuseabschnitt 19 hinaus erstreckt. Um den Zylinderkern 11 in ein Zylindergehäuse 15 einsetzen und mit dem Zylindergehäuse 15 verwenden zu können, muss das Zylindergehäuse 15 daher ausschließlich eine einzige Blockiervertiefung 33 aufweisen, welche den erforderlichen Eingriff des Riegelelements 29 erlaubt. Dies ermöglicht es, den Zylinderkern 11 in grundsätzlich beliebige oder herkömmliche, insbesondere auch bereits bestehende, Zylindergehäuse einzusetzen, die für den Einsatz herkömmlicher Zylinderkerne mit radial über einen Kerngehäuseabschnitt 19 hinausstehenden Plättchenzuhaltungen ausgelegt sind, da solche bestehende Zylindergehäuse stets zumindest eine Blockiervertiefung aufweisen müssen. Der Zylinderkern 11 gemäß der vorliegenden Offenbarung und der anhand der Fig. 1 bis 8 veranschaulichten Ausführungsform bietet somit zusätzlich zu der gegenüber herkömmlichen Zylinderkernen erhöhten Sicherheit eine Rückwärtskompatibilität, indem der Zylinderkern 11 problemlos in bestehende und herkömmliche Zylindergehäuse eingesetzt werden kann.

Die Fig. 4 und 5 veranschaulichen weitergehend die Ausbildung der Plättchenzuhaltungen 25 und des Riegelelements 29 sowie die Möglichkeit zum Sperren des Riegelelements 29 in der Blockierstellung B oder zum Freigeben des Riegelelements 29 für eine Bewegung in die Freigabestellung F.

Wie aus Fig. 4 hervorgeht und bereits erwähnt wurde, sind die Plättchenzuhaltungen 25 durch jeweilige Federn 27 in die Verriegelungsposition V vorgespannt, wobei Fig. 4 die Plättchenzuhaltungen 25 jedoch in der Entriegelungsposition E zeigt, in welcher die Plättchenzuhaltungen 25 im Vergleich zu der Verriegelungsposition V radial weiter innen angeordnet sind. In der Entriegelungsposition E sind jeweilige an den Plättchenzuhaltungen 25 ausgebildete Riegelaufnahmevertiefungen 37 entlang der Zylinderachse Z hintereinander aufgereiht und bilden einen Riegelaufnahmekanal 38, wobei diese Ausrichtung der Riegelaufnahmevertiefungen 37 einen Eingriff eines länglichen und sich entlang der Zylinderachse Z erstreckenden Eingriffsabschnitts 39 des Riegelelements 29 in die Riegelaufnahmevertiefungen 37 ermöglicht, so dass das Riegelelement 29 nach radial innen in die Freigabestellung F gedrängt werden kann. Insbesondere erfolgt eine solche Bewegung des Riegelelements 29 entlang einer Bewegungsrichtung C1, welche senkrecht zu der Bewegungsrichtung C2 der Plättchenzuhaltungen 25 bei einer Bewegung zwischen der Verriegelungsposition V und der Entriegelungsposition E ausgerichtet ist.

Für den Fachmann ersichtlich führt hingegen eine Verstellung zumindest einer Plättchenzuhaltungen 25 aus der Entriegelungsstellung E heraus und insbesondere in die Verriegelungsposition V dazu, dass die Riegelaufnahmevertiefungen 37 nicht sämtlich hintereinander aufgereiht sind und der Eingriffsabschnitt 39 in Anlage zu einem sich an die Riegelaufnahmevertiefung 37 der betreffenden Plättchenzuhaltung 25 anschließenden Verriegelungsabschnitt 41 gelangt, so dass das Riegelelement 29 bei nicht sämtlich in der Entriegelungsposition E angeordneten Plättchenzuhaltungen 25 gegen eine Bewegung nach radial innen in die Freigabestellung F gesperrt ist. Zudem zeigt Fig. 4, dass die Plättchenzuhaltungen 25 jeweilige sich in den Schlüsselkanal 21 hinein erstreckende Sortierabschnitte 43 aufweisen, welche mit einer in Fig. 6A ersichtlichen Sortierstruktur 45 des Schlüssels 23 zusammenwirken, so dass die Plättchenzuhaltungen 25 durch Einführen des zugeordneten Schlüssels 23 in den Schlüsselkanal 21 entgegen der Vorspannung der Federn 27 in die Entriegelungsposition E sortiert werden können.

Fig. 5 veranschaulicht darüber hinaus, dass die erwähnten Blockierabschnitte 47 und 61 innerhalb des Kerngehäuseabschnitts 19 durch einen Verbindungsabschnitt 65 miteinander verbunden sind, welcher zwei Federaufnahmen 53 aufweist, in welche jeweilige Federn 51 eingesetzt sind. Darüber hinaus umfasst das Kerngehäuse 17 einen Stützabschnitt 67, welcher beispielhaft als ein Stützblech 69 mit Umkantungen 71 zur Ableitung radial nach außen wirkender Kräfte auf das Kerngehäuse 17 ausgebildet ist. Wie insbesondere in der Zusammenschau mit den Fig. 3A und 3B ersichtlich wird, ist das Stützblech 69 mittig zwischen den Blockierabschnitten 47 und 61 in die Blockieraussparung 31 des Kerngehäuseabschnitts 19 eingesetzt und unterteilt die Blockieraussparung 31 somit in zwei Teilaussparungen. Die Federn 51 stützen sich ferner an dem Stützabschnitt 67 sowie an dem Verbindungsabschnitt 65 ab, so dass das Riegelelement 29 durch die Feder 51 nach radial innen in die Freigabestellung F vorgespannt ist. Sind die Plättchenzuhaltungen 25 daher in der in Fig. 4 veranschaulichten Entriegelungsposition E angeordnet, kann das Riegelelement 29 aufgrund der Vorspannung unmittelbar nach radial innen gedrängt und der Eingriffsabschnitt 39 in die Riegelaufnahmevertiefungen 37 eingeführt werden, um das Riegelelement 29 in die Freigabestellung F zu überführen.

Fig. 6A veranschaulicht nochmals den Schlüssel 23 mit der bereits erwähnten Sortierstruktur 45, welche mit den Sortierabschnitten 43 der Plättchenzuhaltungen 25 zusammenwirkt. Wird der bei der veranschaulichten Ausführungsform als Wendeschlüssel ausgebildete Schlüssel 23 in den Schlüsselkanal 21 eingeführt, werden die Plättchenzuhaltungen 25 in die Entriegelungsposition E bewegt, so dass das Riegelelement 29 in die Freigabestellung F nach radial innen gelangt. Wie insbesondere Fig. 6B zeigt, ragt das Riegelelement 29 in der Freigabestellung F nicht über den Kerngehäuseabschnitt 19 hinaus, so dass das Riegelelement 29 aus der Blockiervertiefung 33 oder 35 des Zylindergehäuses 15 zurückgezogen und der Zylinderkern 11 für eine Drehung relativ zu dem Zylindergehäuse 15 freigegeben ist. Fig. 6C veranschaulicht nochmals, dass diese Bewegung des Riegelelements 29 in die Freigabestellung F durch Anordnen der Plättchenzuhaltungen 25 in der Entriegelungsstellung E ermöglicht wird, so dass der Eingriffsabschnitt 39 in die Riegelaufnahmevertiefungen 37 oder den durch die entlang der Zylinderachse Z aufgereihten Riegelaufnahmevertiefungen 37 gebildeten Riegelaufnahmekanal 38 eingreifen kann.

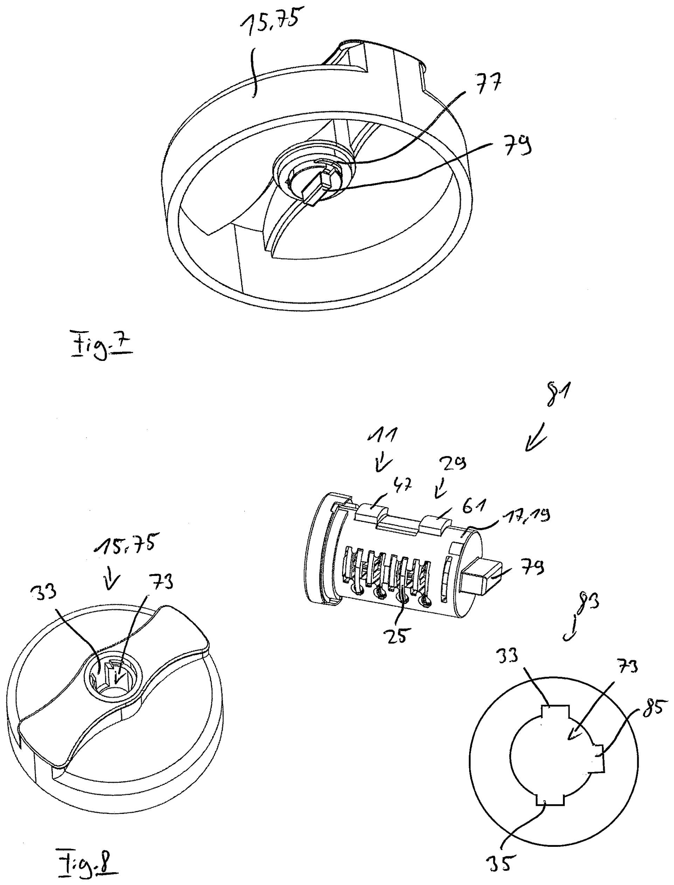

Während das Blockieren des Zylinderkerns 11 gegen eine Drehung in dem Zylindergehäuse 15 somit ausschließlich durch den Eingriff des Riegelelements 29 in die Blockiervertiefung 33 oder 35 erreicht werden kann, zeigt Fig. 3B der Vollständigkeit halber, dass zusätzlich zu dem Riegelelement 29 ferner ein Sicherungsplättchen 77 radial über den Kerngehäuseabschnitt 19 hinaussteht. Wie insbesondere aus Fig. 7 hervorgeht, dient dieses Sicherungsplättchen 77 jedoch lediglich zur axialen Fixierung des Zylinderkerns 11 in dem Zylindergehäuse 15 und nicht zum Blockieren einer Drehung des Zylinderkerns 11. Darüber hinaus weist der Zylinderkern 11 einen axial in das Zylindergehäuse 15 hineinweisenden Antriebsabschnitt 79 auf, um mit einem in den Figuren nicht gezeigten Verriegelungselement zusammenwirken zu können, beispielsweise einem verschwenkbaren Riegel.

Zur Veranschaulichung der erwähnten Rückwärtskompatibilität des Zylinderkerns zeigt Fig. 8 ferner ein Schließsystem 81, welches zusätzlich zu dem Zylindergehäuse 15 und dem Zylinderkern 11 ein weiteres Zylindergehäuse 83 aufweist. An dem Zylindergehäuse 83 sind ebenfalls zwei einander entgegengesetzte Blockiervertiefungen 33 und 35 ausgebildet, wobei zwischen den Blockiervertiefungen 33 und 35 jedoch eine weitere Blockiervertiefung 85 ausgebildet ist. Das Zylindergehäuse 83 würde daher grundsätzlich auch den Einsatz eines Zylinderkerns ermöglichen, bei welchem sowohl in einer Verriegelungsposition radial nach außen ragende und in die Blockiervertiefungen 33 und 35 eingreifende Plättchenzuhaltungen als auch ein zusätzliches Riegelelement vorgesehen ist, welches in die Blockiervertiefung 85 eingreift. Da der Zylinderkern 11 gemäß der Ausführungsform der Fig. 1 bis 8 jedoch lediglich eine einzige Blockiervertiefung 33, 35 oder 85 erfordert, um ein Blockieren einer Drehung relativ zu dem betreffenden Zylindergehäuse 15 oder 83 erreichen zu können, kann der Zylinderkern 11 sowohl mit dem Zylindergehäuse 15 als auch mit dem Zylindergehäuse 83 verwendet werden und aufgrund des flächigen Anliegens des Riegelelements 29 an einer Begrenzung der betreffenden Blockiervertiefung 33, 35 oder 85 die gewünschte hohe Sicherheit gegen ein gewaltsames Verdrehen bereitstellen.

### Bezugszeichenliste

- 11: Zylinderkern
- 13: Zylinderschloss
- 15: Zylindergehäuse
- 17: Kerngehäuse
- 19: Kerngehäuseabschnitt
- 21: Schlüsselkanal
- 23: Schlüssel
- 25: Plättchenzuhaltung
- 27: Feder
- 29: Riegelelement
- 31: Blockieraussparung
- 33: Blockiervertiefung
- 35: Blockiervertiefung
- 37: Riegelaufnahmevertiefung
- 38: Riegelaufnahmekanal
- 39: Eingriffsabschnitt
- 41: Verriegelungsabschnitt
- 43: Sortierabschnitt
- 45: Sortierstruktur
- 46: Schlüsselschaft
- 47: Blockierabschnitt
- 49: Vorspanneinrichtung
- 51: Feder
- 53: Federaufnahme
- 55: Blockierfläche
- 57: Blockierbreite
- 59: Plättchenbreite
- 61: zweiter Blockierabschnitt
- 63: zweite Blockierfläche
- 65: Verbindungsabschnitt
- 67: Stützabschnitt
- 69: Stützblech
- 71: Umkantung
- 73: Kernaufnahmeabschnitt
- 75: Tankdeckel
- 77: Sicherungsplättchen
- 79: Antriebsabschnitt
- 81: Schließsystem
- 83: zweites Zylindergehäuse
- 85: weitere Blockiervertiefung
- B: Blockierstellung
- C1: Bewegungsrichtung
- C2: Bewegungsrichtung
- E: Entriegelungsposition
- F: Freigabestellung
- V: Verriegelungsposition
- Z: Zylinderachse

## Patentansprüche

1. Zylinderkern (11) für ein Zylinderschloss (13),
welcher zum Einsetzen in ein Zylindergehäuse (15) des Zylinderschlosses (13) vorgesehen ist,
umfassend:
- ein Kerngehäuse (17) mit einem zylindrischen Kerngehäuseabschnitt (19) und mit einem sich entlang einer Zylinderachse (Z) in den zylindrischen Kerngehäuseabschnitt (19) hinein erstreckenden Schlüsselkanal (21), wobei der Zylinderkern (11) durch einen in den Schlüsselkanal (21) eingeführten zugeordneten Schlüssel (23) um die Zylinderachse (Z) drehbar ist;
- mehrere in dem Kerngehäuseabschnitt (19) angeordnete Plättchenzuhaltungen (25); und
- ein Riegelelement (29), welches zwischen einer radial bezüglich der Zylinderachse (Z) innenliegenden Freigabestellung (F) und einer radial außenliegenden Blockierstellung (B) beweglich ist,
wobei das Riegelelement (29) in der Blockierstellung (B) radial aus dem Kerngehäuseabschnitt (19) herausragt und dazu ausgebildet ist, in der Blockierstellung (B) in eine zugeordnete Blockiervertiefung (33, 35) des Zylindergehäuses (15) einzugreifen und dadurch eine Drehung des in das Zylindergehäuse (15) eingesetzten Zylinderkerns (11) um die Zylinderachse (Z) relativ zu dem Zylindergehäuse (15) zu blockieren,
wobei die mehreren Plättchenzuhaltungen (25) zwischen einer jeweiligen Verriegelungsposition (V) und einer jeweiligen Entriegelungsposition (E) bewegbar und dazu ausgebildet sind, das Riegelelement (29) in der Verriegelungsposition (V) gegen eine Bewegung in die Freigabestellung (F) zu sperren und in der Entriegelungsposition (E) für eine Bewegung in die Freigabestellung (F) freizugeben, wobei die Plättchenzuhaltungen (25) weder in der Entriegelungsposition (E) noch in der Verriegelungsposition (V) seitlich aus dem Kerngehäuseabschnitt (19) herausragen.

2. Zylinderkern (11) nach Anspruch 1,
wobei das Riegelelement (29) in der Freigabestellung (F) in dem Kerngehäuseabschnitt (19) angeordnet ist.

3. Zylinderkern (11) nach Anspruch 1 oder 2,
wobei eine Bewegungsrichtung (C1) des Riegelelements (29) bei einer Bewegung von der Blockierstellung (B) in die Freigabestellung (F) senkrecht zu einer Bewegungsrichtung (C2) der Plättchenzuhaltungen (25) bei einer Bewegung zwischen der Entriegelungsposition (E) und der Verriegelungsposition (V) ausgerichtet ist.

4. Zylinderkern (11) nach einem der vorhergehenden Ansprüche,
wobei die Plättchenzuhaltungen (25) sowohl in der Entriegelungsposition (E) als auch in der Verriegelungsposition (V) vollständig innerhalb des Kerngehäuseabschnitts (19) angeordnet sind.

5. Zylinderkern (11) nach einem der vorhergehenden Ansprüche,
wobei die Plättchenzuhaltungen (25) in der Verriegelungsposition (V) seitlich weiter außen positioniert sind als in der Entriegelungsposition (E).

6. Zylinderkern (11) nach einem der vorhergehenden Ansprüche,
wobei das Riegelelement (29) in die Freigabestellung (F) vorgespannt und dazu ausgebildet ist, bei in der Entriegelungsposition (E) angeordneten Plättchenzuhaltungen (25) aufgrund der Vorspannung in die Freigabestellung (F) zu gelangen; und/oder
wobei die Plättchenzuhaltungen (25) durch Einführen des zugeordneten Schlüssels (23) in den Schlüsselkanal (21) in die Entriegelungsposition (E) überführbar sind; und/oder
wobei die Plättchenzuhaltungen (25) in die Verriegelungsposition (V) vorgespannt sind; und/oder
wobei aufeinanderfolgend angeordnete Plättchenzuhaltungen (25) ausgehend von der Entriegelungsstellung (E) in entgegengesetzte Richtungen in eine jeweilige Verriegelungsposition (V) vorgespannt sind; und/oder wobei die Plättchenzuhaltungen (25) jeweilige Sortierabschnitte (43) aufweisen, wobei die Plättchenzuhaltungen (25) durch Zusammenwirken der Sortierabschnitte (43) mit einer Sortierstruktur (45) des zugeordneten Schlüssels (23) aus der Verriegelungsposition (V) in die Entriegelungsposition (E) bewegbar sind.

7. Zylinderkern (11) nach einem der vorhergehenden Ansprüche,
wobei die Plättchenzuhaltungen (25) eine jeweilige Riegelaufnahmevertiefung (37) aufweisen und wobei das Riegelelement (29) einen Eingriffsabschnitt (39) aufweist, welcher bei in der Entriegelungsposition (E) positionierten Plättchenzuhaltungen (25) in die Riegelaufnahmevertiefungen (37) hineindrängbar ist, wobei das Riegelelement (29) bei in die Riegelaufnahmevertiefungen (37) eingreifendem Eingriffsabschnitt (39) die Freigabestellung (F) einnimmt;
insbesondere wobei die Plättchenzuhaltungen (25) jeweilige sich an die Riegelaufnahmevertiefungen (37) anschließende Verriegelungsabschnitte (41) aufweisen, wobei das Riegelelement (29) an dem jeweiligen Verriegelungsabschnitt (41) einer in der Verriegelungsposition (V) angeordneten Plättchenzuhaltung (25) anliegt, wobei die Bewegung des Riegelelements (29) in die Freigabestellung (F) durch das Anliegen an dem jeweiligen Verriegelungsabschnitt (41) gesperrt ist.

8. Zylinderkern (11) nach einem der vorhergehenden Ansprüche,
wobei das Riegelelement (29) zumindest einen Blockierabschnitt (47) mit einer in der Blockierstellung (B) des Riegelelements (29) aus dem Kerngehäuseabschnitt (19) herausragenden Blockierfläche (55) zum Blockieren der Drehung des Zylinderkerns (11) aufweist,
insbesondere wobei die Blockierfläche (55) eine Blockierbreite (57) entlang der Zylinderachse (Z) aufweist und wobei die Plättchenzuhaltungen (25) eine Plättchenbreite (59) entlang der Zylinderachse (Z) aufweisen, wobei die Blockierbreite (57) zumindest doppelt so groß ist wie die Plättchenbreite (59) oder wobei die Blockierbreite (57) zumindest dreimal so groß ist wie die Plättchenbreite (59) oder wobei die Blockierbreite (57) zumindest viermal so groß ist wie die Plättchenbreite (59).

9. Zylinderkern (11) nach Anspruch 8,
wobei das Riegelelement (29) den zumindest einen Blockierabschnitt (47) und einen entlang der Zylinderachse (Z) zu dem zumindest einen Blockierabschnitt (47) versetzten zweiten Blockierabschnitt (61) aufweist,
wobei das Riegelelement (29) insbesondere einen Verbindungsabschnitt (65) aufweist, welcher die Blockierabschnitte (47, 61) innerhalb des Kerngehäuseabschnitts (19) miteinander verbindet.

10. Zylinderkern (11) nach Anspruch 9,
wobei das Kerngehäuse (17) einen zwischen den Blockierabschnitten (47) angeordneten Stützabschnitt (67) aufweist, wobei das Riegelelement (29) durch eine an dem Stützabschnitt (67) abgestützte Vorspanneinrichtung (49), insbesondere eine Feder (51), in die Freigabestellung (F) vorgespannt ist,
wobei der Kerngehäuseabschnitt (19) insbesondere eine Blockieraussparung (31) aufweist, durch welche das Riegelelement (29) in der Blockierstellung (B) radial herausragt, wobei der Stützabschnitt (67) ein die Blockieraussparung (31) zwischen den Blockierabschnitten (47) überdeckendes Stützblech (69) aufweist, wobei das Stützblech (69) weiter insbesondere Umkantungen (71) zur Ableitung radial nach außen wirkender Kräfte auf das Kerngehäuse (17) aufweist.

11. Zylinderschloss (13),
umfassend ein Zylindergehäuse (15) und einen Zylinderkern (11) nach einem der vorhergehenden Ansprüche.

12. Zylinderschloss (13) nach Anspruch 11,
wobei das Zylindergehäuse (15) von einem Tankdeckel (75) für einen Fahrzeugtank gebildet ist; und/oder
wobei das Zylindergehäuse (15) einen Kernaufnahmeabschnitt (73) aufweist, in welchem der Zylinderkern (11) um die Zylinderachse (Z) drehbar gelagert ist, und wobei das Zylindergehäuse (15) eine Blockiervertiefung (33) aufweist, in welche das Riegelelement (29) in der Blockierstellung (B) eingreift, wobei eine Drehung des Zylinderkerns (11) um die Zylinderachse (Z) durch den Eingriff des Riegelelements (29) in die Blockiervertiefung (33, 35) gesperrt ist,
wobei die Drehung des Zylinderkerns (11) insbesondere ausschließlich durch den Eingriff des Riegelelements (29) in die Blockiervertiefung (33) gesperrt ist.

13. Zylinderschloss (13) nach Anspruch 12,
wobei das Zylindergehäuse (15) eine der Blockiervertiefung (33) entgegengesetzte zweite Blockiervertiefung (35) aufweist; und/oder wobei das Zylindergehäuse (15) keine weitere Blockiervertiefung für einen Eingriff von Plättchenzuhaltungen (25) aufweist.

14. Schließsystem (81),
umfassend ein erstes Zylindergehäuse (15), ein zweites Zylindergehäuse (83) und einen Zylinderkern (11) nach einem der Ansprüche 1 bis 18, wobei der Zylinderkern (11) wahlweise in das erste Zylindergehäuse (15) oder in das zweite Zylindergehäuse (83) einsetzbar ist.

15. Schließsystem (81) nach Anspruch 14,
wobei sich das erste Zylindergehäuse (15) und das zweite Zylindergehäuse (83) voneinander unterscheiden,
wobei jedoch sowohl das erste Zylindergehäuse (15) als auch das zweite Zylindergehäuse (83) einen Kernaufnahmeabschnitt (73), in welchen der Zylinderkern (11) um die Zylinderachse (Z) drehbar gelagert einsetzbar ist, und eine Blockiervertiefung (33) aufweisen, in welche das Riegelelement (29) des eingesetzten Zylinderkerns (11) in der Blockierstellung (B) eingreift, wobei eine Drehung des Zylinderkerns (11) um die Zylinderachse (Z) durch den Eingriff des Riegelelements (29) in die Blockiervertiefung (33) gesperrt ist; und/oder
wobei das erste Zylindergehäuse (15) eine der Blockiervertiefung (33) entgegengesetzte zweite Blockiervertiefung (35), jedoch keine zwischen den Blockiervertiefungen (33, 35) gelegene weitere Blockiervertiefung aufweist, wobei das zweite Zylindergehäuse (83) eine der Blockiervertiefung (33) entgegengesetzte zweite Blockiervertiefung (35) sowie eine zwischen den Blockiervertiefungen (33, 35) gelegene weitere Blockiervertiefung (85) aufweist.
